Europäisches Patentamt

European Patent Office

Office européen des brevets

(19)

(11) Veröffentlichungsnummer: **0 401 915**
**A2**

(12) **EUROPÄISCHE PATENTANMELDUNG**

(21) Anmeldenummer: **90201408.3**

(22) Anmeldetag: **05.06.90**

(51) Int. Cl.⁵: **H04M 1/72**

(30) Priorität: **08.06.89 DE 3918697**

(43) Veröffentlichungstag der Anmeldung:
**12.12.90 Patentblatt 90/50**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**

**NL-5621 BA Eindhoven(NL)**
(84) **FR GB**

(72) Erfinder: **Ranner Georg, Ing.-Grad**
**Nürnberger Strasse 60**
**D-8560 Lauf/Peg(DE)**
Erfinder: **Höflinger, Jürgen, Dipl.-Ing.**
**Alter Kirchenweg 50**
**D-8505 Röthenbach/Peg.(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) **Kennungsaustausch bei nachrichtentechnischen Geräten.**

(57)

2.1. Zur Vermeidung eines Verbindungsaufbaus zwischen nicht einander Paarweise zugeordneter Geräte, z.B. schnurlosen Telefonen, ist es bekannt, daß die Paarweise zugeordneten Geräte während der gesamten Verbindungsdauer Kennungen miteinander austauschen. Eine solche Kennungsübertragung macht sich beim Sprachempfang durch einen gesprächsbeeinträchtigenden "Störpieps" bemerkbar.

2.2. Bei paarweise einander zugeordneten Geräten kann der Austausch von Kennungen während des Gesprächs so vorgenommen werden, daß dies für den Benutzer kaum wahrnehmbar ist und der hierzu notwendige schaltungstechnische Aufwand möglichst gering bleibt, wenn das erste Gerät einen ersten Teil der Kennung aussendet, das zweite Gerät den empfangenen Kennungsteil mit einem ersten Teil der gemeinßamen Kennung Vergleicht und bei Übereinstimmung dieses Teils der Kennung das zweite Gerät einen zweiten Teil seiner Kennung aussendet, und daß das im ersten Gerät empfangene Kennungsteil mit einem zweiten Teil der gemeinsamen Kennung vergleichen wird.

2.3. Ein Anwendungsgebiet der Erfindung liegt im bereich der schnurlosen Telefone.

FIG. 1

## Kennungsaustausch bei nachrichtentechnischen Geräten

Die Erfindung betrifft nachrichtentechnische Geräte, die jeweils einander paarweise zugeordnet sind, welchen zur Überprüfung der paarweisen Zuordnung eines ersten und eines zweiten Gerätes aus einer Vielzahl von Kennungen eine Kennung gemeinsam ist, wobei das erste Gerät zum Überprüfen der Zuordnung diese gemeinsame Kennung aussendet und ein zweites Gerät empfangene Kennungen mit der gemeinsamen Kennung vergleicht.

Paarweise einander zugeordnete nachrichtentechnische Geräte sind beispielsweise schnurlose Telefone. Bei schnurlosen Telefonen bilden ein Basisgerät und ein Mobilteil ein Funkstationspaar. Zur Vermeidung eines Verbindungsaufbaus zwischen nicht einander paarweise zugeordneter Geräte ist es beispielsweise aus DE 35 03 308 bekannt, daß das Basisgerät eine Kennung aus einer Vielzahl von Kennungen erzeugt, welche in einer Speichereinrichtung des Mobilteiles gespeichert wird. Die Kennung ist beispielsweise ein mehrstelliger binärer Zahlenwert. Zum Verbindungsaufbau bzw. während der gesamten Verbindungsdauer tauschen Basisgerät und Mobilteil die Kennung miteinander aus. Das die Kennung empfangende Gerät überprüft die empfangene Kennung mit der gespeicherten Kennung und bricht bei Nichtübereinstimmung der beiden Kennungen die Verbindung ab.

Zur Vermeidung eines zusätzlichen Übertragungskanals wird diese zu übertragende Kennung auf jeweils einen der für eine Verbindung bereitgestellten Duplex-Funkkanäle übertragen. Eine übliche Methode ist es, die Kennung im Sprachband zu übertragen. Hierzu wird für die Zeitdauer der Übertragung der Kennung sendeseitig der Sprachzweig unterbrochen und die Kennung eingekoppelt. Diese Kennung wird empfangsseitig wieder ausgekoppelt und wie bereits beschrieben ausgewertet.

Um eine zufällige Übereinstimmung von Kennungen nicht zugeordneter Geräte zu vermeiden, darf die Länge der Kennung, d.h. bei Binärwerten als Kennung deren Anzahl von Bits, eine Mindestlänge nicht unterschreiten. Mit der Länge des Kennungscodes erhöht sich aber entsprechend die Zeitspanne der Sprechsignalunterbrechung und macht sich beim Sprachempfang durch einen gesprächsbeeinträchtigenden "Störpieps" bemerkbar. Aus diesem Grund ist es auch schon versucht worden, die Kennung außerhalb des Sprachbandes zu übertragen. Es ist hierzu jedoch ein erhöhter technischer Aufwand erforderlich.

Aufgabe der vorliegenden Erfindung ist es, bei paarweise einander zugeordneten nachrichtentechnischen Geräten der eingangs genannten Art einen Austausch von Kennungen während des Gesprächs so vorzunehmen, daß dies für den Benutzer kaum wahrnehmbar ist und der hierzu notwendige schaltungstechnische Aufwand möglichst gering bleibt.

Diese Aufgabe wird bei gattungsgemäßen Geräten dadurch gelöst, daß das erste Gerät einen ersten Teil der Kennung aussendet, daß das zweite Gerät den empfangenen Kennungsteil mit einem ersten Teil der gemeinsamen Kennung vergleicht und daß bei Übereinstimmung dieses Teils der Kennung das zweite Gerät einen zweiten Teil seiner Kennung aussendet, und daß das im ersten Gerät empfangene Kennungsteil mit einem zweiten Teil der gemeinsamen Kennung verglichen wird.

Der Erfindung liegt die Erkenntnis zugrunde, daß die Beeinträchtigungen bei einer Übertragung der Kennung im Sprachband der Duplex-Funkkanäle kaum noch bemerkt werden, wenn die Zeit zur Übertragung der Kennungen verringert wird. Wegen der begrenzten Bandbreite des Sprachkanals kann die Kennung jedoch nicht einfach durch Erhöhung der Übertragungsgeschwindigkeit schneller übertragen werden.

Anstelle daß nun jedes Gerät die volle Kennung zur überprüfung aussendet, sendet jedes Gerät nur einen Teil der Kennung aus, wobei beide Teile zusammengesetzt die ganze Kennung ergeben. Da hierbei, wenn auch in verschiedenen Geräten und zeitlich auseinanderliegend, auf diese Weise ebenfalls die gesamte Kennung überprüft wird, ist hierdurch die gleiche Sicherheit gegen zufälliges oder auch bewußt unberechtigtes Mithören gegeben, wie auch bei Gerätepaaren, bei denen nur ein Gerät die ganze Kennung aussendet und das andere Gerät die Überprüfung der Kennung durchführt. Zweckmäßigerweise werden die Kennungsteile so gewählt, daß sie ungefähr gleich lang sind. Auf diese Weise wird die Beeinträchtigung eines Benutzers auf beide Benutzer gleichmäßig verteilt. Durch die eingeschränkte Wahrnehmungsfähigkeit des menschlichen Gehöres empfinden beide Benutzer kaum noch eine Beeinträchtigung.

Im folgenden wird die Erfindung anhand eines in der Zeichnung dargestellten Ausführungsbeispiels näher beschrieben und erläutert.

Es zeigen:

Fig. 1 ein schnurloses Telefon.

Fig. 2 ein schematisches Blockschaltbild eines schnurlosen Telefons.

Als Ausführungsbeispiel einander zugeordneter nachrichtentechnischer Geräte wird im folgenden ein aus einem Basisgerät 1 und einem Mobilteil 2 bestehendes schnurloses Telefon beschrieben. Das Basisgerät 1 ist an eine Fernmeldeleitung angeschlossen. Zur Führung eines Gesprächs zwischen dem Mobilteil 2 und dem Basisgerät 1 muß eine Duplex-Funkverbindung zwischen beiden Geräten aufgebaut werden.

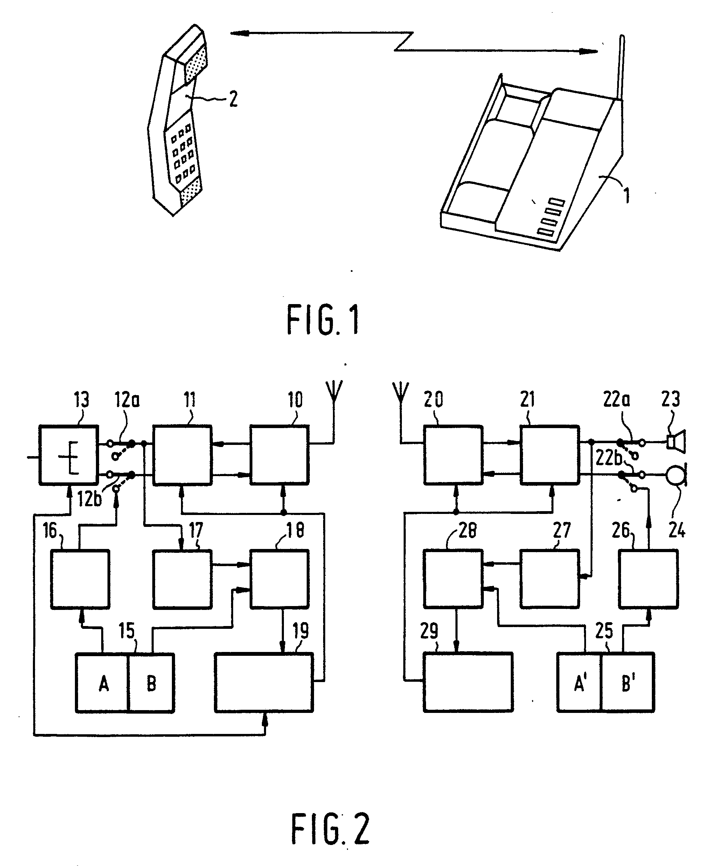

Fig. 2 zeigt in schematischer Darstellung in der linken Hälfte das Blockschaltbild des Basisgerätes 1 und in der rechten Hälfte das Blockschaltbild des Mobilteils 2. Über ein Amtsschnittstellenmodul 13 ist das Basisgerät mit einem Fernmeldenetz verbunden. Das Amtsschnittstellenmodul 13 leistet alle übertragungs- und vermittlungstechnischen Anpassungen zwischen einer internen vierdrähtigen Schnittstelle und dem zweidrähtigen Anschluß ans Fernmeldenetz. Das Amtsschnittstellenmodul 13 erzeugt weiter die zum Anwählen eines anderen Teilnehmers benötigten Impulse (beim Impuls-Wahl-Verfahren) bzw. Frequenzen (bei Mehr-Frequenz-Wahl-Verfahren). Hierzu wird das Amtsschnittstellenmodul 13 von einer zentralen Steuerschaltung 19 des Basisgeräts entsprechend angesteuert. Bei einem ankommenden Ruf erzeugt das Amtsschnittstellenmodul 13 ein entsprechendes Signal, welches der zentralen Steuerung 19 zugeführt wird.

Bei einer bestehenden Fernsprechverbindung wird das ankommende Fernsprechsignal über ein NF-Teil 11 einem HF-Teil 10 des Basisgeräts 1 zugeführt. In einem HF-Teil 20 des Mobilteils wird es dann wieder in den NF-Bereich umgesetzt und einem NF-Teil 21 zugeführt. Hier wird es ver stärkt und einem Lautsprecher 23 zugeführt. Das Sprachsignal eines Benutzers des Mobilteils wird von einem Mikrophon 24 aufgenommen und über NF-Teil 21 und HF-Teil 20 zum Basisgerät 1 zurückgesendet. Über HF-Teil 10 und NF-Teil 11 wird das Sprachsignal des Mobilteilbenutzers dem Amtsschnittstellenmodul 13 zugeführt.

Es gibt schnurlose Telefone, bei denen die Kennung als Zufallszahl erzeugt und jeweils zwischen Basisgerät und Mobilteil immer wieder neu vereinbart wird. Hier im Ausführungsbeispiel ist die Kennung dem Gerätepaar bereits bei der Produktion fest vorgegeben und in einem Festwertspeicher 15 bzw. 25 abgelegt worden. Hieraus ergeben sich jedoch keine Prinzipiellen Unterschiede für das Wesen der Erfindung. Im Ausführungsbeispiel der Erfindung wird als beiden Geräten gemeinsame Kennung eine Binärwertfolge der Gesamtlänge von 20 Bit verwendet. Hierdurch ergeben sich insgesamt über eine Million verschiedene Kombinationsmöglichkeiten. Als erstes Kennungsteil A werden die ersten zehn Bit und als zweites Kennungsteil B die letzten zehn Bit der Kennung verwendet. Hierdurch sind beide Kennungsteile gleichlang.

Zur Überprüfung der Kennung der an einer Duplex-Funkverbindung beteiligten Geräte sendet das Basisgerät 1 sowohl zu Beginn als auch in festen zeitlichen Abständen den ersten Kennungsteil A zum Mobilteil 2. Als fester zeitlicher Abstand wurde im Ausführungsbeispiel eine Zeitspanne von fünfzehn Sekunden gewählt. Zur Aussendung des ersten Kennungsteils A wird der im Festwertspeicher 15 gespeicherte erste Kennungsteil einem Kennungsgeber 16 zugeführt. Die Steuerschaltung 19 veranlaßt durch ein Steuersignal die Aussendung dieses ersten Kennungsteils. Der Kennungsgeber 16 moduliert entsprechend hierzu den NF-Teil 11. In der Fig. 2 ist dies symbolisch durch einen zwischen Amtsschnittstelle 13 und NF-Teil 11 eingefügten Umschalter 12b, dem der Ausgang des Kennungsgebers 16 zugeführt ist, dargestellt. Das modulierte NF-Signal wird wie ein ankommendes Fernsprechsignal zum Mobilteil übertragen. Im Mobilteil 2 ist ein Kennungsdetektor 27 angeordnet, der die modulierte NF erkennt und den zugeordneten binären Zahlenwert zurückgewinnt. Sobald durch den Kennungsdetektor 27 im NF-Signal ein entsprechend moduliertes NF-Signal erkannt wird, wird für die Zeitdauer der Übertragung des ersten Kennungsteils A das an den Lautsprecher 23 weitergeleitete NF-Signal abgesenkt. Diese Absenkung ist im Blockschaltbild symbolisch durch einen Schalter 22a dargestellt.

Durch diese NF-Signalabsenkung kann der Benutzer des Mobilteils 2 hierdurch den übertragenen ersten Kennungsteil A nicht hören. Da die Zeitspanne der Absenkung zur Übertragung des ersten Kennungsteiles nur etwa die Hälfte der Übertragung der ganzen Kennung beträgt, ist diese Austastlücke relativ kurz. Eine sogenannte "weiche Ausblendung", d.h. die Vermeidung eines schlagartigen Absenkens des Signalpegels, macht den Unterbrechungseffekt für den Benutzer kaum noch wahrnehmbar.

Mit Beginn des Gesprächsaufbaus wird bereits zum erstenmal der erste Kennungsteil übertragen. Zu diesem Zeitpunkt wird das Mobilteil 2 auf den Empfang des Kennungsteils synchronisiert, so daß es den nächsten Kennungsteil nur nach Ablauf des festen zeitlichen Abstands innerhalb einer gewissen Toleranzgrenze erwartet. Kann das Mobilteil 2 innerhalb dieses Synchronfensters keinen Kennungsteil empfangen, so wartet die Steuerschaltung 29 das nächste Synchronisationsfenster ab. Ist wiederum kein Empfang eines Kennungsteils möglich, so wird dies als Unterbrechung der Verbindung zum zugeordneten Basisgerät gewertet. Die Steuerschaltung 29 unterbricht nun ihren Sende-/Empfangs-Betrieb und geht wieder in den Zustand über, in welchem sie auf einen neuen Verbindungsaufbau wartet.

Wird hingegen im Normalfall innerhalb des Synchronfensters ein Kennungsteil empfangen, so vergleicht eine angeordnete Auswerteschaltung 28 im Mobilteil 2 diesen ersten empfangenen Kennungsteil A mit dem ersten Teil A' der im Mobilteil im Festwertspeicher 25 gespeicherten Kennung. Stimmen beide Kennungsteile überein, so veranlaßt die Auswerteschaltung 28 über die mobilteilseitige zentrale Steuerschaltung 29 die Aussendung des zweiten Teils B' der im Mobilteil im Festwertspeicher 25 gespeicherten Kennung mittels eines mobilteilseitig angeordneten Kennungsgebers 26. Wiederum symbolisch dargestellt durch den Umschalter 22b wird hierzu anstelle des Mikrophons 24 kurzzeitig der Kennungsgeber 26 an dem NF-Teil 21 angeschaltet.

Im Basisgerät 1 ist ebenfalls eine Auswerteschaltung 18 angeordnet, die einen mittels eines Kennungsdetektors 17 empfangenen Kennungsteil mit dem zweiten Teil B der im Basisgerät 1 im Festwertspeicher 15 gespeicherten Kennung in der Auswerteschaltung 18 vergleicht. Auch hierbei wird beim Empfang des Kennungsteils das zum Amtsschnittstellenmodul 13 gehende NF-Signal, wiederum symbolisch dargestellt, durch einen Schalter 12a weich ausgeblendet. Stimmt die empfangene Kennung mit dem zweiten Teil B der im Basisgerät gespeicherten Kennung überein, ist die Gesamtüberprüfung der Kennung erfolgreich durchgeführt. Basisgerät und Mobilteil haben sich somit gegenseitig authorisiert, so daß die zentrale Steuerschaltung 19 die Duplex-Verbindung zwischen Basisgerät 1 und Mobilteil 2 für die nächsten fünfzehn Sekunden aufrecht erhält.

Stimmen der vom Mobilteil empfangene erste Kennungsteil A und der im Mobilteil gespeicherte erste Kennungsteil A' nicht überein oder erhält das Mobilteil garkeinen Kennungsteil, so unterdrückt die mobilteilseitige Auswerteschaltung 28 die Aussendung des zweiten Kennungsteils B'. Nach Aussendung des ersten Kennungsteils erwartet jedoch die basisgeräteseitige Auswerteschaltung 18 innerhalb einer bestimmten Zeitspanne, z.B. innerhalb einer Sekunde, den Eingang des ihr zugeordneten zweiten Kennungsteils B. Kann das Basisgerät innerhalb dieser Zeitspanne keinen entsprechenden zweiten Kennungsteil empfangen, so wertet das Basisgerät dies als Zeichen dafür, daß nunmehr die Funkverbindung allenfalls zu einem der Basisstation nicht zugeordneten Mobilteil unterhalten wird. Die basisgeräteseitige Auswerteschaltung 18 sendet daraufhin ein zweites Mal den ersten Kennungsteil. Wenn die basisgeräteseitige Auswerteschaltung 18 daraufhin wiederum einen zweiten Kennungsteil nicht erhält unterbricht die zentrale Steuerschaltung 19 die Funkverbindung.

Desgleichen wird die Funkverbindung durch die Steuerschaltung 19 unterbrochen, wenn zum zweiten Mal hintereinander ein nicht mit dem gespeicherten zweiten Kennungsteil B übereinstimmender Kennungsteil am Basisgerät eintrifft. Auf diese Weise ist sichergestellt, daß eine Funkverbindung nur zwischen Paarweise zugeordneten Basisgeräten und Mobilteilen unterhalten wird.

## Ansprüche

1. Nachrichtentechnische Geräte, die jeweils einander paarweise zugeordnet sind, welchen zur Überprüfung der paarweisen Zuordnung eines ersten und eines zweiten Gerätes aus einer Vielzahl von Kennungen eine Kennung gemeinsam ist, wobei das erste Gerät zum Überprüfen der Zuordnung diese vereinbarte Kennung aussendet und ein zweites Gerät empfangene Kennungen mit der gemeinsamen Kennung vergleicht,
dadurch gekennzeichnet,
daß das erste Gerät einen ersten Teil der Kennung aussendet, daß das zweite Gerät den empfangenen Kennungsteil mit einem ersten Teil der gemeinsamen Kennung vergleicht und daß bei Übereinstimmung dieses Teils der Kennung das zweite Gerät einen zweiten Teil seiner Kennung aussendet, und daß der im ersten Gerät empfangene Kennungsteil mit einem zweiten Teil der gemeinsamen Kennung verglichen wird.

2. Nachrichtentechnisches Gerät nach Anspruch 1,
dadurch gekennzeichnet,
daß erster und zweiter Kennungsteil ungefähr gleiche Längen aufweisen.

3. Nachrichtentechnisches Gerät nach einem der Ansprüche 1 oder 2,
dadurch gekennzeichnet,
daß der Austausch der Kennungsteile nach einem synchronisierten Zeitschema vorgenommen wird.

4. Nachrichtentechnisches Gerät nach einem der Ansprüche 1, 2 oder 3,
dadurch gekennzeichnet,
daß während des Empfangs eines Teiles der Kennung der Signalpegel der wiedergegebenen empfangenen Signale abgesenkt wird.

5. Nachrichtentechnisches Gerät nach Anspruch 3,
dadurch gekennzeichnet,
daß die Absenkung der Signalpegel innerhalb einer gewissen Verzögerungszeit (weiche Austastung) erfolgt.

6. Nachrichtentechnisches Gerät nach einem der Ansprüche 1, 2, 3, 4 oder 5,
dadurch gekennzeichnet,
daß das eine nachrichtentechnische Gerät ein Basisgerät 1 und das andere nachrichtentechnische Gerät ein Mobilteil 2 eines schnurlosen Telefons ist.

EP 0 401 915 A2

FIG. 1

FIG. 2